# EUROPEAN PATENT APPLICATION

(11) **EP 4 711 523 A1**
(43) Date of publication of application: **18.03.2026**
(21) Application number: 25197776.5
(22) Date of filing: 25.08.2025
(51) Int. Cl.: E01F 15/14, F16B 13/06

(54) **AN ANCHOR FOR AN IMPACT PROTECTION POST AND AN IMPACT PROTECTION POST WITH THIS ANCHOR**

(30) Priority: 16.09.2024 CZ 20240356
(71) Applicant: Pekar, Miroslav, 53901 Hlinsko (CZ)
(72) Inventor: Pekar, Miroslav, 53901 Hlinsko (CZ)
(74) Representative: Sedlák, Jirí

(57) **Abstract**

The anchor (1) comprises an abutting cross plate (5), a threaded seating (6) connected to the abutting cross plate (5) and arranged above it, a deformable portion (7) connected to the threaded seating (6) and arranged above it, and a threaded rod (8) that passes through the deformable portion (7) into the threaded seating (6). The deformable portion (7) is made as a cage consisting of an upper cylindrical body (9) and a lower cylindrical body (10). The cylindrical bodies (9, 10) are hollow, and deformable ribs (11) alternating with gaps (12) are vertically arranged between the cylindrical bodies (9, 10). The upper ends (13) of the deformable ribs (11) are connected to the upper cylindrical body (9) and the lower ends (14) of the deformable ribs (11) are connected to the lower cylindrical body (10) so that the deformable ribs (11) and cylindrical bodies (9, 10) together form an integral unit, with the deformable ribs (11) projecting beyond the outer contour of the cylindrical bodies (9, 10) in part of their length.

## Description

### Field of the Invention

The present invention relates to an anchor for impact protection devices, specifically an anchor for an impact protection post used to protect equipment, technological devices, machines, buildings or parts of buildings, as well as persons from impacts by means of transport such as forklift trucks, manipulators, gantry cranes, etc. The present invention also relates to an impact protection post with this anchor.

### Background of the Invention

Impact protection devices, also known as "barriers", are anchored to the floor using various types of anchors. For the purposes of describing this invention, the term "anchor" refers to a fastener, one part of which is fixed to the floor and the other part of which is used to fix the barrier to the floor.

One option is a simple anchor or an anchor with reinforcement, which is inserted into a hole pre-drilled in the floor and filled with cement or resin. The upper part of the anchor is provided with a thread onto which the barrier is then screwed. The disadvantage of this solution is that relatively large holes must be drilled, which causes dust accumulation, and this is undesirable for some types of operations, as is the use of resins. However, the main disadvantage is that the barrier can only be installed after the concrete or resin has cured.

Another option is to use drilling anchors, which are inserted into a hole of the specified diameter, and the expansion sleeve of the anchor, which is made of plastic or metal, expands when the fastening screw is screwed into the anchor. However, these anchors are not very impact-resistant, often are pulled out and damage floors.

To eliminate these shortcomings, special anchors developed to secure barriers are used, in which a special expansion element expands in the hole using a threaded rod passing through the barrier and is additionally filled with cement or resin, but the barrier is already sufficiently secured by means of the expansion element and there is no need to wait for the grout to cure.

Such a solution is known from document US 1788270, which describes an expansion anchoring device that uses a flexible body, most often a braided or woven fibre, or a soft tube made of fabric or elastic rubber. Once a threaded screw is inserted into this body, shortening (axial shrinkage) occurs, causing radial expansion into the wall of the opening. The disadvantage of such an expansion anchoring device is its uncontrolled spread along its entire length, resulting in unstable anchoring of the threaded screw pressing this expansion device.

Another well-known solution is the use of an expansion anchor bolt described in document US 2521065. The anchor bolt comprises a straight shaft furnished with oppositely-threaded portions and a nut cooperatively engaged with each of said threaded portions, shallow grooves intersecting corresponding marginal faces of said nuts for spaced alignment longitudinally of said shaft, and a plurality of like, longitudinally bowed straps disposed to bridge between said nuts. Tightening the upper nut deforms the straps and spreads them against the inner wall of the opening. The disadvantage of the described solution is its dependence on the stiffness of the straps and the tolerance of the opening, resulting in unstable anchoring.

The stability of the anchoring is partially addressed by the anchor known from document EP 2 685 002. The barrier is fixed to the base of the fixing element, which is inserted into a hole in the floor. The fixing element comprises a threaded seating, a deformable portion, an annular body, and a threaded rod. The threaded seating is basically a nut with an abutting cross plate on the underside and a deformable portion on the upper side. Both the abutting cross plate and the deformable portion are welded to the threaded seating. The deformable portion is destined to deform and enter into contact with the wall of the hole in the floor. It has an annular structure diverging upwards, comprising a plurality of appendages that can diverge from one another. The annular body, which is an expansion roller with two sleeve couplings, abuts on top of the deformable portion. The upper sleeve coupling abuts against the lower abutting surface of the barrier, while the lower sleeve coupling abuts against the deformable portion so that the appendages diverge from one another when the deformable portion moves upwards.

For the purposes of describing this invention, the term "upwards" refers to the direction from the abutting cross plate to the barrier.

This is achieved by means of a threaded rod, the lower end of which is screwed into a threaded seating. The threaded rod then passes through the deformable portion and the annular body to the barrier, which has an upper abutting surface inside, against which the lock nut abuts. Turning it moves it upwards. The deformable portion also moves upwards, but its appendages diverge from one another due to pressure on the lower sleeve coupling of the annular body and expand into the wall of the hole. The lower sleeve coupling is provided with grooves for enabling passage of cement mixture or resin into the hole.

The solution according to EP 2 685 002 eliminates the disadvantage of having to wait for the fixing grout to cure, but the grout may not always fill the entire volume of the hole because the grooves in the lower sleeve coupling have a relatively small cross-section and do not always ensure that the grout fills the entire volume. This leads to a reduction in the strength of the anchor. Similarly, the free ends of the fingers, which dig into the wall of the hole and which may also be equipped with auxiliary spikes, create indentations in the walls of the hole that act as notches, i.e. areas of reduced strength. Upon impact, the entire barrier breaks off at the notch.

The object of the invention is to create an anchor that would completely eliminate the above-described shortcomings.

### Summary of the Invention

The stated object is solved by means of an anchor for fixing an impact protection post for installation in a hole in the floor. The anchor comprises an abutting cross plate, a threaded seating connected to the abutting cross plate and arranged above it, a deformable portion connected to the threaded seating and arranged above it, wherein the deformable portion is destined to deform and enter into contact with the wall of the hole in the floor, and a threaded rod that passes through the deformable portion into the threaded seating. The essence of the invention is that the deformable portion is made as a cage consisting of an upper cylindrical body and a lower cylindrical body. The cylindrical bodies are hollow, and deformable ribs alternating with gaps are vertically arranged between the cylindrical bodies. The upper ends of the deformable ribs are connected to the upper cylindrical body and the lower ends of the deformable ribs are connected to the lower cylindrical body so that the deformable ribs and cylindrical bodies together form an integral unit, with the vertical deformable ribs projecting beyond the outer contour of the cylindrical bodies at least in part of their length. This arrangement not only saves one component compared to EP 2 685 002, i.e. the annular body, but above all guarantees high strength for the anchor, so that in the event of an impact, it does not break off and thus neither does the impact protection post. This is because, after the deformable portion expands, there is no damage to the hole in the form of indentations in the wall of the hole, as the expanded ribs abut flat against the surface of the hole with their convex central part.

In a preferred embodiment, the width of the deformable ribs in the central part is less than the width of the upper and lower ends. This arrangement ensures that deformation of the deformable portion occurs precisely in the defined area, which is the narrowest, central part.

In another preferred embodiment, the deformable ribs are V-shaped with the apex in the central part and with the sides extending towards the upper and lower ends. This arrangement allows for the creation of large gaps, ensuring easy and complete flow of the cement mixture through the deformable portion to the abutting cross plate.

In another preferred embodiment, the anchor has 3 to 5 deformable ribs, preferably 4 deformable ribs. This arrangement gives the deformable portion sufficient strength and flexibility during deformation, while ensuring that the cement flows through the gaps to the abutting cross plate.

In another preferred embodiment, a threaded seating is provided with a plastic cover to protect the threaded rod. The plastic cover is in the form of a plastic tube passing across the anchor from the abutting seating through the deformable body. This arrangement is advantageous in case of reuse of the threaded rod when relocating the anchor assembly and the impact protection post.

In another preferred embodiment, the edges of the abutting cross plate are rounded. This arrangement provides support for the anchor and the entire assembly without additional damage to the surface of the hole.

Furthermore, the stated object is solved by means of an assembly of an anchor and an impact protection post, which includes a sleeve, an inner cavity, a lower abutting surface, and an upper abutting surface. The essence of the invention is that the anchor is made as described above, with the upper cylindrical body abutting against the lower abutting surface and the threaded rod passing through the opening into the inner cavity, where it is provided with a lock nut abutting against the upper abutting surface. This arrangement provides a sufficiently strong connection between the anchor and the impact protection post, preventing the impact protection post from breaking out of the anchor. Furthermore, this arrangement allows for easy relocation of the assembly if necessary.

The advantages of the anchor for the impact protection post and the impact protection post with this anchor according to this invention are mainly that the anchor has high strength and, in the event of an impact, it does not break off and thus neither does the impact protection post, because after the deformable portion expands, there is no deformation of the hole in the form of indentations in the wall of the hole, and also because the cage-like arrangement of the deformable portion with large gaps between the ribs enables the cement mixture to flow in completely.

### Explanation of drawings

The present invention will be explained in detail by means of the following figures where:

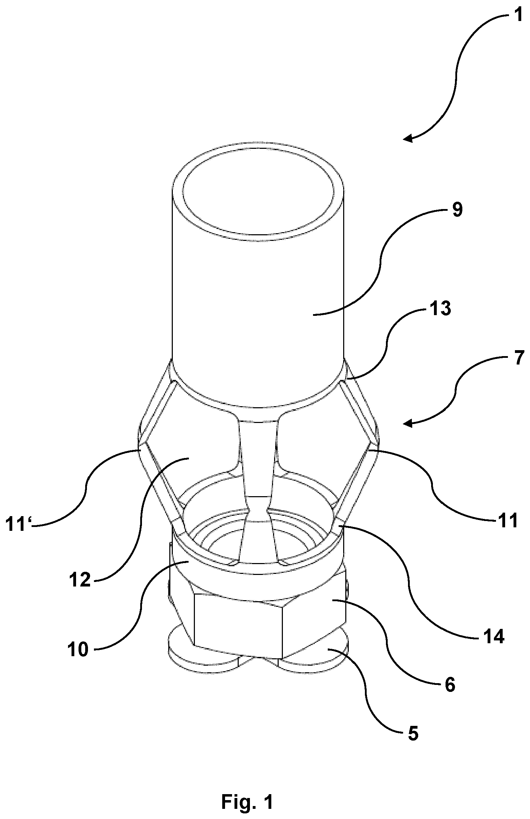

- Fig. 1: shows a perspective view of the anchor,

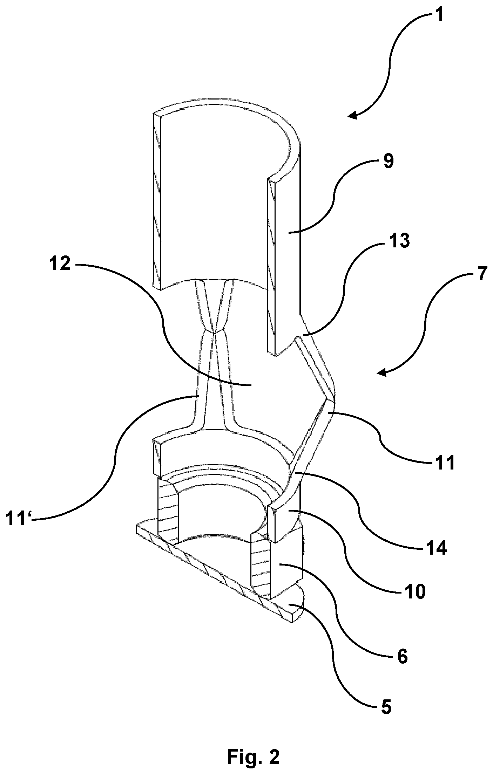

- Fig. 2: shows a section of the anchor,

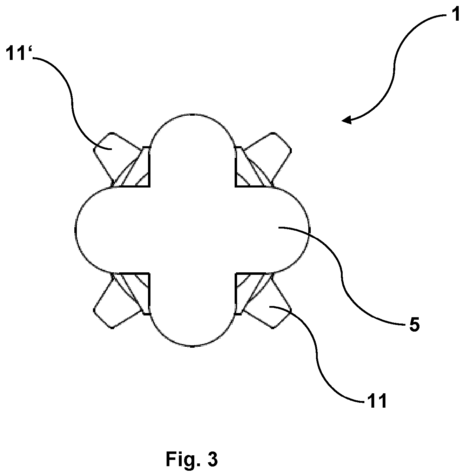

- Fig. 3: shows a bottom view of the anchor,
- Fig. 4: shows a section of the anchor placed in a hole when expanded,
- Fig. 5: shows a section of the anchor placed in a hole when not expanded.

### Example of the invention embodiments

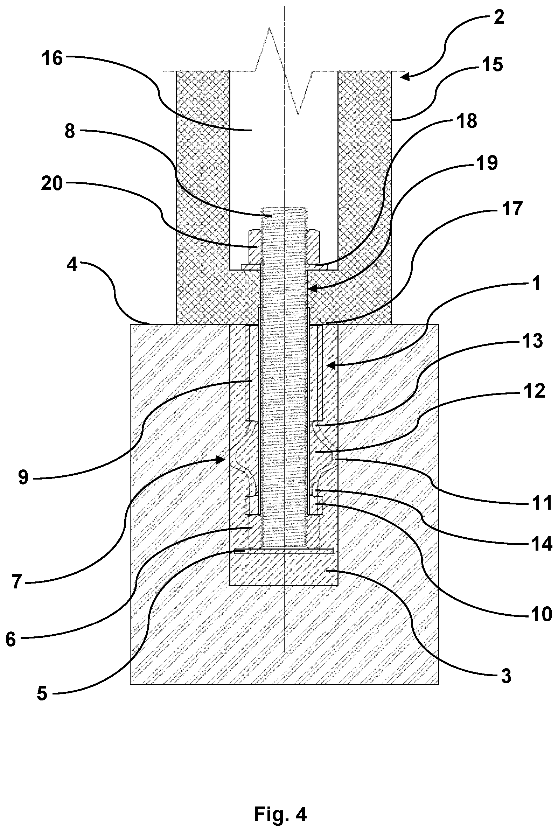

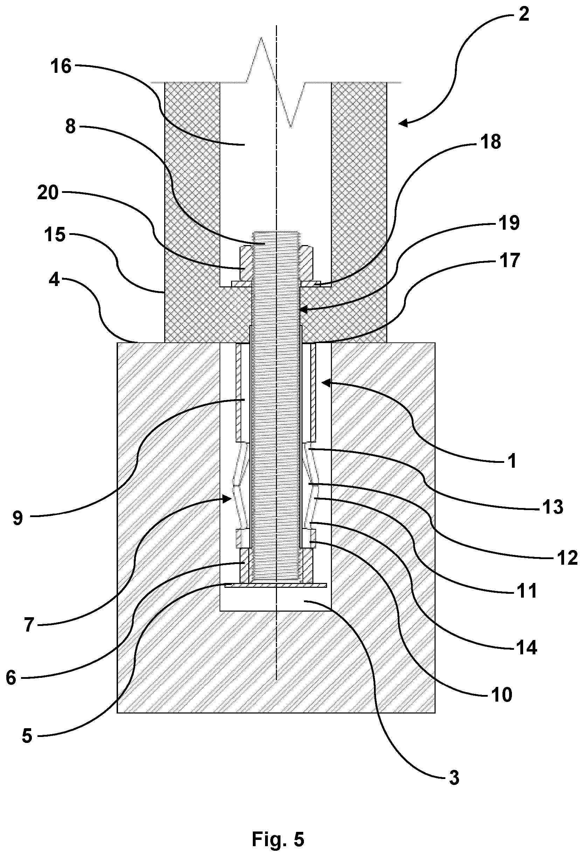

The barrier is made as an assembly of an anchor 1 and an impact protection post 2, as shown in Figures 4 and 5. The anchor 1 is placed in a pre-drilled hole 3 with a depth of 170 mm and a diameter of 72 mm in the floor 4, where it is then filled with cement mixture through a template that shows the filling level so that when the anchor 1 is inserted, the cement mixture does not leak out of the hole 3. In another example, not illustrated here, the pre-drilled hole 3 has a depth of 120 mm and a diameter of 52 mm. These dimensions are used for smaller barriers. However, the dimensions of the hole 3 and the anchor 1 are always adapted to specific conditions and dimensions.

The anchor 1 consists of an abutting cross plate 5 with rounded edges. In another example, not illustrated here, the edges of the abutting cross plate 5 are not rounded. The abutting cross plate 5 abuts against the bottom of the hole 3. The threaded seating 6 in the form of a nut is arranged on the abutting cross plate 5, which is provided with a plastic cover on the inside for fastening and protecting the threaded rod 8. The plastic cover is in the form of a plastic tube passing across the anchor 1 from the abutting seating 6 through the entire length of the deformable body 8. In another example, not illustrated here, the threaded seating 6 is not provided with a plastic cover, or it is a metal cover. The deformable portion 7 is welded onto the threaded seating 6, which is destined to deform after tightening with an impact wrench and to enter into contact with the wall of the hole 3. The deformable portion 7 is made as a metal cage consisting of a hollow upper cylindrical body 9 and a hollow lower cylindrical body 10, between which there are four vertically arranged deformable ribs 11, 11', which form an integral unit with the upper cylindrical body 9 and the lower cylindrical body 10. In another example, not illustrated here, 3 to 5 deformable ribs 11, 11' are arranged between the upper cylindrical body 9 and the lower cylindrical body 10. The upper ends 13 of the deformable ribs 11 are connected to the upper cylindrical body 9 and the lower ends 14 of the deformable ribs 11 are connected to the lower cylindrical body 10, because the entire cage is made as a moulded piece. The deformable ribs 11, 11' are alternated with gaps 12 to create a cage-like arrangement, wherein the deformable ribs 11, 11' are extended in their central part beyond the edge of the cylindrical bodies 9, 10 to predefine the direction of expansion after deformation of the deformable portion 7.

The deformable ribs 11, 11' are V-shaped with the apex in the central part and with the sides extending towards the upper ends 13 of the deformable ribs 11, 11' and towards the lower ends 14 of the deformable ribs 11, 11'. The width of the sides of the deformable ribs 11, 11' widens from the central part towards the upper ends 13 of the deformable ribs 11, 11' and towards the lower ends 14 of the deformable ribs 11, 11'. In another example, not illustrated here, the deformable ribs 11, 11' have the same width along their entire length and may have other arrangements for predefining the convex area, e.g. grooves, recesses, etc.

The impact protection post 2 comprises a sleeve 15 and an inner cavity 16. The inner cavity 16 is provided with the upper abutting surface 18, against which the lock nut 20 located at one end of the threaded rod 8 abuts. Furthermore, the inner cavity 16 is provided with the lower abutting surface 17, against which the upper cylindrical body 9 abuts, wherein the inner cavity 16 has the opening 19 between the lower abutting surface 17 and the upper abutting surface 18, through which the threaded rod 8 passes. First, the anchor 1 is connected to the impact protection post 2 by means of the threaded rod 8, which is tightened in the threaded seating 6 on one side by means of the lock nut 20 on the upper abutting surface 18 of the impact protection post 2. The assembly is then inserted into the hole 3 in the floor 4 and tightened with an impact wrench using a socket wrench slid onto the lock nut 20. This tightening causes the central part of the deformable ribs 11 to be extended towards the walls of the hole 3, wherein the deformable ribs 11, 11' form an ellipsoidal shape, i.e. a rounded or convex central part, which is pressed against the inner surface of the hole 3.

### Industrial applicability

The anchor for the impact protection post and the impact protection post with this anchor according to this invention can be used in particular to secure the internal and external environments of industrial plants against impacts caused during the handling of objects or the movement of persons. Furthermore, the anchor for the impact protection post and the impact protection post with this anchor can be used to secure parking lots, industrial halls, workshops, corridors for the transportation of goods, or passage of persons.

### List of index reference numerals

- 1: anchor
- 2: impact protection post
- 3: hole
- 4: floor
- 5: abutting cross plate
- 6: threaded seating
- 7: deformable portion
- 8: threaded rod
- 9: upper cylindrical body
- 10: lower cylindrical body
- 11: deformable rib
- 11': deformable rib
- 12: gap
- 13: upper end of the deformable rib
- 14: lower end of the deformable rib
- 15: sleeve
- 16: inner cavity
- 17: lower abutting surface
- 18: upper abutting surface
- 19: opening
- 20: lock nut

## Claims

1. An anchor (1) for fixing an impact protection post (2) for installation in a hole (3) in the floor (4), comprising an abutting cross plate (5), a threaded seating (6) connected to the abutting cross plate (5) and arranged above it, a deformable portion (7) connected to the threaded seating (6) and arranged above it, wherein the deformable portion (7) is destined to deform and enter into contact with the wall of the hole (3) in the floor (4), and a threaded rod (8) that passes through the deformable portion (7) into the threaded seating (6), **characterized in that** the deformable portion (7) is made as a cage consisting of an upper cylindrical body (9) and a lower cylindrical body (10), wherein the cylindrical bodies (9, 10) are hollow, and the deformable ribs (11) alternating with gaps (12) are vertically arranged between the cylindrical bodies (9, 10), wherein the upper ends (13) of the deformable ribs (11) are connected to the upper cylindrical body (9) and the lower ends (14) of the deformable ribs (11) are connected to the lower cylindrical body (10) so that the deformable ribs (11) and cylindrical bodies (9, 10) together form an integral unit, with the vertical deformable ribs (11) projecting beyond the outer contour of the cylindrical bodies (9, 10) at least in part of their length.

2. The anchor (1) according to claim 1, **characterized in that** the width of the deformable ribs (11) is smaller in the central part than the width of the upper ends (13) and lower ends (14).

3. The anchor (1) according to claim 1 or 2, **characterized in that** the deformable ribs (11) are V-shaped with the apex in the central part and with the sides extending towards the upper ends (13) and lower ends (14).

4. The anchor (1) according to any of claims 1 to 3, **characterized in that** there are 3 to 5 deformable ribs (11).

5. The anchor (1) according to any of claims 1 to 4, **characterized in that** there are 4 deformable ribs (11).

6. The anchor (1) according to any of claims 1 to 5, **characterized in that** the threaded seating (6) is provided with a plastic cover for protecting the threaded rod (8).

7. The anchor (1) according to any of claims 1 to 6, **characterized in that** the edges of the abutting cross plate (5) are rounded.

8. An assembly of an anchor (1) and an impact protection post (2), which includes a sleeve (15), an inner cavity (16), a lower abutting surface (17) and an upper abutting surface (18), **characterized in that** the anchor (1) is made according to any of claims 1 to 7, with the upper cylindrical body (9) abutting against the lower abutting surface (17) and the threaded rod (8) passing through the opening (19) into the inner cavity (16), where it is provided with a lock nut (20) abutting against the upper abutting surface (18).
